(19) Europäisches Patentamt
European Patent Office
Office européen des brevets

(11) EP 1 919 209 A1

(12) EUROPEAN PATENT APPLICATION

(43) Date of publication:
07.05.2008 Bulletin 2008/19

(51) Int Cl.:
$H04N\ 5/911$ (2006.01)  $G06T\ 5/00$ (2006.01)
$H04N\ 5/21$ (2006.01)

(21) Application number: 06123273.2

(22) Date of filing: 31.10.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK RS

(71) Applicant: SONY DEUTSCHLAND GMBH
10785 Berlin (DE)

(72) Inventors:
• Lei, Zhichun
c/o Sony Deutschland GmbH
70327, Stuttgart (DE)

• Unruh, Christian
c/o Sony Deutschland GmbH
70327, Stuttgart (DE)

(74) Representative: Körber, Martin Hans et al
Mitscherlich & Partner
Patent- und Rechtsanwälte
Postfach 33 06 09
80066 München (DE)

(54) **Method and device for fast and effective noise reduction**

(57) The present invention relates to the field of noise reduction. The invention especially relates to a filter for temporal domain noise reduction and to a method, a device and a computer software for temporal domain noise reduction of image sequences. The filter for temporal domain noise reduction is operable to switch between a finite impulse response filter characteristic and an infinite impulse response filter characteristic. The device for temporal domain noise reduction of video signals which comprise image frames ordered by a time index comprises a filter for successively filtering the image frames of a video signal, whereby a filter coefficient of the filter is a function of a frame counting index, the frame counting index corresponding to the frame index shifted by an offset.

Fig. 4

**Description**

Field of the invention

The invention relates to the field of noise reduction. The invention especially relates to a filter for temporal domain noise reduction and to a method, a device and a computer software for temporal domain noise reduction of image sequences.

Description of the related prior art

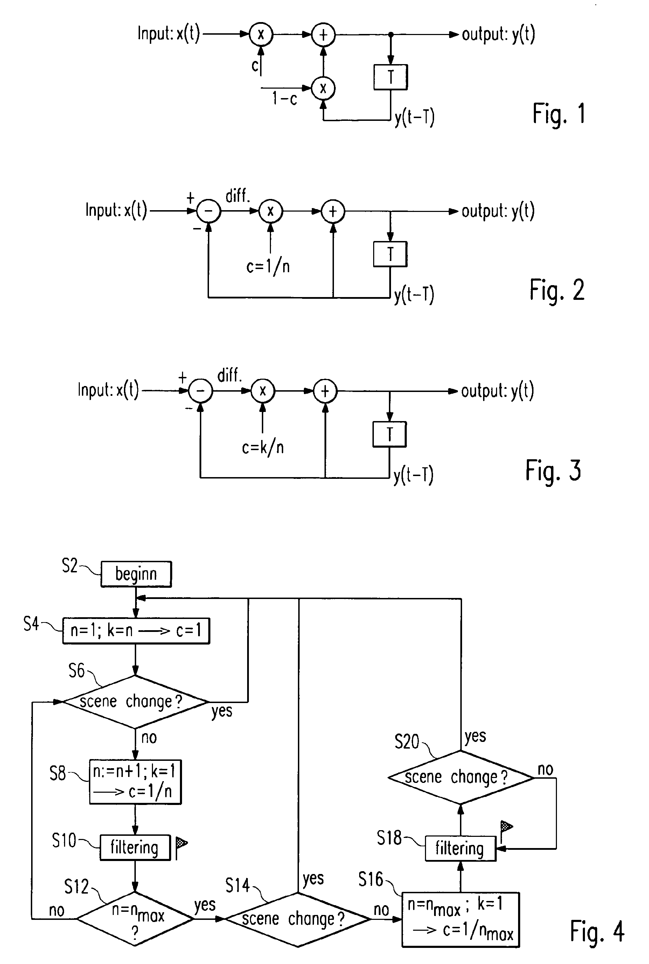

Given a sequence of images, temporal domain noise reduction can be superior to spatial domain noise reduction. Such image sequence can, for example, be given by a sequence of image frames of a video signal. The term 'image frame' or, for short, 'frame' will in the following be employed with the meaning 'one image of a sequence of images' and must not be seen as restricted to the context of a common video signal. While spatial filtering tends to blur an image, temporal filtering does not. This provides one advantage of temporal filtering over spatial filtering. Usually, the noise reduction effect achieved by temporal filtering is far stronger than that achieved by spatial filtering. Temporal domain noise reduction however encounter problems when a scene change happens or when motion is present in the image sequence. The notion of a scene change may include, as a special case, the beginning of an image sequence. In fact, all three cases - beginning of a scene, scene change and motion - result in a reduced correlation between images. Technically, scene change can be seen as a motion which is affecting more or less the whole image. The following examples will elucidate the problems encountered of the prior art temporal domain noise reduction techniques.
Recursive filters are widely employed for temporal domain noise reduction. Fig. 1 shows a first order recursive filter. In Fig. 1, T represents a delay time. T may for example have a value of one half of the frame/field period. The delay can be realized by a frame/field memory. The variable c takes a value between zero and one and is the zeroth order coefficient of the recursive filter. 1-c is the first order coefficient of the recursive filter. Since in the case of a first order recursive filter the first order coefficient is completely determined by the zeroth order coefficient, it is sufficient to specify only the zeroth order coefficient, in order to completely determine the filter. The less the coefficient c, the stronger the smoothing or noise reduction effect or noise reduction power of this filter and vice versa. Fig. 1 shows a graphical representation of the following filter equation

$$y(t) = c*x(t) + (1\text{-}c)*y(t\text{-}T), \tag{1}$$

whereby $y(t)$ is the filter output at time t, $y(t-T)$ is the filter output at time t-T, $x(t)$ is the filter input at time t, t=0, T, 2T, 3 T, ... and $c \in [0,1]$. In noise reduction practice, instead of zero, a small positive value is set as the lower limit of c. Obviously, no temporal noise reduction can be done for the first image of a sequence and usually the filter is initialized by setting $y(0)=x(0)$. The output of a first order recursive filter is a mixture of the actual input and the previous filter output. In case of a higher order recursive filter, the output is a mixture of the actual input and previous outputs. Thus, the change among the current output and the previous output is reduced compared to the change among the current input and the previous input and, as a result, noise is reduced.
Filtering is pixelwise, thus, for every pixel of an image, a filtering operation as described by equation (1) is carried out. With each input image, given by a plurality of x(t)'s, there is associated a corresponding output image, given by a plurality of y(t)'s. The input image is also called 'original image' or 'unfiltered image', the corresponding output image is called 'filtered image'. Corresponding notions are employed when speaking of pixels, i.e. 'unfiltered pixel', 'filtered pixel', etc.
Using a temporal noise reduction filter, noise should not be attempted to be reduced in motion areas if no motion compensation is carried out - otherwise, motion artifacts would appear. In order to deal with motion, the temporally recursive filter is normally realized adaptively, i.e. the coefficient c is adapted to e.g. the value difference of two pixels in two consecutive images and the value difference of the pixels in question is compared to a threshold. If this difference is smaller than a pre-defined threshold, one assumes that the difference is caused by noise rather than by motion, thus, a small coefficient c is chosen so that strong noise reduction is achieved. If the difference becomes larger, in particular larger than a predefined threshold, one assumes that the difference is probably not or not only caused by noise, but by motion. In this case, a larger coefficient c is chosen, so that the actual input is less filtered. If the upper limit 1 of the coefficient c is chosen (i.e. c=1), the input x(t) is not filtered actually and y(t)=x(t) holds, that is, the filtered image is the same as the unfiltered image.
A disadvantage of the adaptive temporally recursive filter is that, many images are needed until the noise reduction effect is achieved, that is, until the convergence of the filter. This holds even though there is neither motion nor scene change in the image sequence. The slow convergence speed of the temporally recursive filter has been of no major concern in the analog era. In the digital era, the slow convergence speed affects directly the coding efficiency, which in turn affects the transmission frequency. For medical application, the low convergence speed means increased radiation, which shall be avoided. For some applications the state-of-the-art adaptive temporally recursive filter even is not applicable at all.

It is an object of the present invention to enable a better temporal domain noise reduction as compared to the prior art. Other objects of the present invention become apparent from the detailed description invention.

Summary of the invention

This object is solved by the device, the method and the software product for temporal domain noise reduction of a video signal according to independent claims 1, 20 and 36 and by a filter for temporal domain noise reduction according to claim 2.

The device for temporal domain noise reduction of video signals which comprise image frames ordered by a frame index comprises a filter for successively filtering the image frames of a video signal, whereby a filter coefficient of the filter is a function of a frame counting index, said frame counting index corresponding to the frame index shifted by an offset. The dependence of the filter coefficient on the frame counting index allows for a faster convergence of the adaptive temporally filter.

The filter for temporal domain noise reduction is operable to switch between a finite impulse response filter characteristic and an infinite impulse response filter characteristic. Favorably, the finite impulse response filter characteristic is the impulse response characteristic of an averaging filter. The filter for temporal domain noise reduction is favorably employed in a device for temporal domain noise reduction of video signals which comprise image frames ordered by a frame index whereby the filter is operable to successively filter the image frames of a video signal, a filter coefficient of the filter is a function of the frame counting index and said frame counting index corresponds to the frame index shifted by an offset.

Favorably the dependence of the filter coefficient is such that the noise reduction power of the filter is non-constant and monotonically increasing with the frame counting index. This provides the advantage, that a high noise reduction is achieved. A high adaptability of a filter corresponds to a high instantaneous convergence speed. As the noise reduction power and the adaptability of a filter are conflicting properties, the convergence speed of the filter can be high at the beginning and device for temporal domain noise reduction of video signals is favorably characterized in that the dependence of the filter coefficient is such that the adaptability of the filter is non-constant and monotonically decreasing with the frame counting index.

Favorably, the filter coefficient is the zeroth order filter coefficient.

Favorably, the filter coefficient is a non-constant and monotonically decreasing function of the frame counting index. The well-known mathematical notion 'non-constant' allows for partial constancy. The well-known mathematical notion 'monotonically decreasing' is known to have the meaning 'not increasing'.

Favorably and unless the filter coefficient is set to a value of zero based on a dependence of the filter coefficient other than the dependence from the frame counting index, the absolute value of the filter coefficient is larger than a predetermined positive value. This restriction of the filter coefficient means that a minimum adaptability of the filter is guaranteed, that is, the filter is able to follow the input signal. Thus, the dependence on the frame counting index is required to guarantee a minimum adaptability. However, it might be desirable to have no or very weak adaptability, therefore the absolute value of the filter coefficient is allowed to become smaller than a predetermined positive value.

Favorably, the filter coefficient comprises a first factor which is independent of the frame counting index and a second factor which is a non-constant and monotonically decreasing function of the frame counting index. In this case, the absolute value of the second factor favorably is larger than a predetermined positive value.

Favorably, the filter coefficient is, up to a maximum value of the frame counting index, inversely proportional to the frame counting index. In this case it is advantageous, that starting from the maximum value, the filter coefficient is independent of the frame counting index. This specific dependence of the filter coefficient provides a computationally effective implementation of the above teachings.

Favorably, the device for temporal domain noise reduction of video signals comprises a scene change detection device for detecting scene change, whereby the filter is adapted to reset the frame counting index when a scene change is detected.

Favorably, the device for temporal domain noise reduction of video signals comprises a motion detection device for detecting motion, whereby the filter is adapted to reset the frame counting index when motion is detected. Motion detection can be carried out on non-motion-compensated and on motion-compensated image sequences. In this case it is advantageous that the filter coefficient is dependent on motion detection information provided by the motion detection device, whereby the filter coefficient takes a relatively high value for a relatively high probability of motion, or - alternatively -, the filter coefficient takes a relatively low value for a relatively high probability of motion. The alternatives correspond to different application cases. In case of the device comprising a motion detection, the device further advantageously comprises an image analyzer for determining a plurality of motion vectors, each motion vector characterizing a motion type present in the image sequence, a processing device adapted to operate for each motion vector a separate frame counting index, calculate differences of value between a first pixel of a first image frame and corresponding pixels of a second image frame, whereby each pixel of the corresponding pixels is shifted relative to the first pixel by a different one of the motion vectors, and select the frame counting index which corresponds to the motion vector yielding the smallest difference of pixel values, whereby the filter coefficient is a function of the selected frame counting index and the filter is adapted to filter the first pixel.

Favorably, the filter is a recursive filter.

The invention can likewise be seen in a method for temporal domain noise reduction of a video signal wherein image frames of the video signal are ordered by a frame index and are successively filtered by a filter, whereby a filter coefficient of the filter is a function of a frame counting index, said frame counting index corresponding to the frame index shifted by an offset. Advantageous embodiments of the method for temporal domain noise reduction are defined in the respective subclaims.

The invention can likewise be seen in a software product comprising program information that, when executed on a computing device, is operable to carry out the inventive method for temporal domain noise reduction.

Brief description of the drawings

Fig. 1 shows a graphical representation of an state-of-the-art temporal domain recursive filter.

Fig. 2 shows a graphical representation of an averaging filter implemented by recursive filter.

Fig. 3 shows a graphical representation of a time dependent adaptive temporally recursive filter constituting an embodiment of the present invention.

Fig. 4 shows a flow diagram depicting a process of determination of the filter coefficient c of the recursive filter of Fig. 3.

Fig. 5 shows functional groups of an embodiment of the present invention.

Detailed description of the invention

A filter that averages the images in an image sequence, an averaging filter, can be implemented by a recursive filter, if the coefficient c in equation (1) is defined to be $1/n$, whereby n counts the image frames starting from 1 and is called a frame counting index. It is to be noted here, that a frame counting index must not necessarily take integer values, but can for example be given by a frame time. The adaption of the following embodiments to non-integer cases by means of linear transformations is straight-forward to the skilled person and will not be considered any further in the following. Further it is to be noted, that the averaging filter is a finite impulse response (FIR) filter, while a recursive filter is an infinite impulse response (IIR) filter. The implementation of the FIR filter by the IIR filter becomes possible by virtue of the dependency of the filter coefficient c on frame index or time. Fig. 2 shows the recursive filter of Fig. 1 with $c = 1/n$, whereby a different but mathematically equivalent implementation is depicted, which eliminates the first order filter coefficient 1-c and thereby has the advantage of requiring only one computationally intensive multiplication. The filter of Fig. 2 is represented by the equation

$$y(t) = c*x(t) + (1-c)*y(t-T)$$
$$= y(t-T) + c*[x(t) - y(t-T)] \qquad \text{with } c = 1/n. \qquad (2)$$

The noise reduction effect of an FIR filter is unimportant compared to that of the recursive filter. The recursive filter, however, converges slowly. A FIR filter, can achieve noise reduction effect faster than the recursive filter; for instance, about 7dB noise reduction can be achieved after five frames. Now, if n is not allowed to increase beyond a given $n_{max}$, but remains constant after $n_{max}$ has been reached, the filter described by equation (2) implements an averaging filter on the beginning of an image sequence and after $n_{max}$ has been reached implements a recursive filter on the rest of the sequence. Thus, the fast convergence of the averaging filter can be combined with the strong noise reduction capability of the recursive filter. The dependence of the filter coefficient c on the frame counting index n of the form c=1/n has the effect that the adaptability and the instantaneous convergence speed decrease with the frame counting index and that the noise reduction power increases with the frame counting index n. A method for temporally domain noise reduction employing the recursive filter of equation (2) with an n counting the image frames starting from 1 and bounded above by a $n_{max}$ constitutes a first embodiment of the present invention.

In order to deal with scene change and motion the filter coefficient c=1/n is made dependent on scene and motion detection results via a factor k, so that c=k/n. This adaptive filter is represented by the equation

$$y(t) = y(t-T) + k/n*[x(t) - y(t-T)] \qquad (3)$$

and can be seen as a combination of an averaging filter with an adaptive recursive filter. Fig 3 shows a filter according to equation (3). The filter coefficient c is composed of two factors. One factor is independent of the frame counting index and the other factor is a non-constant and monotonically decreasing function of the frame counting index. Generally, filtering is pixelwise and is carried out on corresponding pixels. 'Corresponding' can mean 'located at the same image position', denoted for example by horizontal and vertical coordinates x and y, but is not restricted to that meaning. The seventh embodiment, described below, provides for an example of corresponding pixels at different image positions.

Motion detection may be implemented by taking the difference of two corresponding pixels in two consecutive image frames. Hereby, the timely preceding image may be the unfiltered or the corresponding filtered image but is advantageously taken to be the filtered image. One advantage being that the filtered image contains less noise, so that the obtained difference is a better estimate of the true (noiseless) pixel value difference. This difference signal is denoted by 'diff' in Fig. 2 and Fig. 3. Corresponding two pixels hereby, may be located at the same image position, but may also be located at different image positions. The seventh embodiment, described below, provides for an example of corresponding pixels at different image positions. Generally, motion detection can be carried out on non-motion-compensated and on motion-compensated image sequences.

A method for temporally domain noise reduction employing the recursive filter of equation (3) with an n counting the image frames starting from 1 and bounded above by a $n_{max}$ constitutes a second embodiment of the present invention.

Next, some application cases of the combined filter of equation (3) for noise reduction purposes are explained in greater detail.

I.

A first application case to be considered is temporal noise reduction for image sequences such as a movie image sequence. This application case corresponds to a third embodiment of the present invention. Here, all images are displayed with the same emphasis and can, in this sense, be seen as equal. In this case, k is chosen from among the range [1, n], that is, k may take all the values in between and inclusive 1 and n, whereby n counts image frames starting from 1 and is bound above by $n_{max}$.

First, the dependence of k on scene change and motion detection results is explained. In case of no scene change and no motion, k=1 is chosen. k=1 implies - see equation (3) - the strongest noise reduction. In case of a scene change or in case of motion, k=n is selected. k=n implies - see equation (3) - no noise reduction. As the question 'if a scene change has happened or not?' and the question 'if motion occurred or not?' can not always be decided with certainty, k may also take all the values in between. Thus, for a relatively high probability that a scene change or motion has happened, k takes a relatively high value, and, for a relatively low probability that a scene change or motion has happened, k takes a relatively low value. The selection process of k may be implemented by a look-up table. The look-up table is providing the value of k for a given outcome of the scene change detection and motion detection.

Second, the dependence of n on scene change and motion detection is explained. As is explained above, n counts image frames starting from 1, but is bound above by $n_{max}$ and remains constant after $n_{max}$ has been reached (n $\in$ [1, $n_{max}$]). When a scene change or motion is detected, n is reset to its initial value, that is n=1. Thus, the frame counting index n corresponds to an overall image frame index shifted by an offset. The frame counting index can be seen as a relative frame index. Since n is reset in case of scene change or motion, the offset is variable. The offset may take the value zero. As indicated above, scene change or motion detection may indicate only a probability of scene change or of motion. Therefore, if the probability of scene change or motion is higher than a given threshold, the frame counting index n is set to its initial value, that is n=1. Otherwise, nothing is done, that is, n behaves as described above: either is augmented by one or remains constant. n may be implemented by a register. A three bit register provides for a $n_{max}$ of up to $2^3=8$, a four bit register provides for a $n_{max}$ of up to $2^4=16$, and a five bit register for a $n_{max}$ of up to $2^5=32$. Thus, a n with a $n_{max}$ in the range of [5, 8], [9, 16] or [17, 32] is favorably implemented by a three, four and five bit register, respectively. A value of $n_{max}=16$ has been shown to be a good value for many applications, for example film.

Despite having explained the dependency of k and n on outcomes of scene change and motion detection, it is practically and theoretically valuable to consider cases where k and/or n are dependent on scene change detection only. Here, k and/or n simply behave as if no motion were detected. Of course, the technical implementation of this reduced behavior is less complex compared to the implementation of the full dependency on scene change and motion, since no motion detection and no dependence of k and/or n on motion detection outcomes has to be implemented.

Thus, firstly, a pure scene change case - corresponding to a fourth embodiment - is considered. If a scene change happens, for example at the beginning of a sequence, k is equal to n. Therefore, $y(t)=x(t)$, which means that no noise is reduced and that the motion artifact is avoided. Additionally, n is reset to its initial state. Assuming that no further scene change happens, k is equal to 1. Therefore, the filter works like an averaging filter until $n_{max}$ is reached and the onset of noise reduction is fast. In other words, the filter converges fast, faster than a recursive filter with a constant filter coefficient $1/n_{max}$. When $n_{max}$ is reached, the filter works like a recursive filter with the time invariant coefficient $c=1/n_{max}$ and the high noise reduction capability of the recursive filter can be appreciated. The steady state noise in the filter output signal is called residual noise. The ratio of the noise present in the unfiltered image to the residual noise of the filtered image is given by the coefficient c. In case of a four bit register, $n_{max}$ may take the value of 16. In this case, noise is reduced by a factor of 1/16, which corresponds to 6.25% of the original noise level.

The pure scene change case, in the level of detail considered so far, is summarized by the flow chart of Fig. 4. Step S2 indicates the beginning of an image sequence. The method starts in step S4 by initializing the frame counting index n, that is, n is set to 1. Further k is set to n, therefore c=1 and no noise is reduced in the first image of an image sequence. After this, the method proceeds to step S6 where it is decided whether a scene change has occurred or not. If yes, the method returns to step S4. If no however, the method proceeds to step S8. In step S8, n is augmented by one and the filter coefficient $c=k/n=1/n$ is determined. After this the method proceeds to step S 10, where the current image is filtered with the recursive filter defined by the coefficient c determined in step S8. After this, the method proceeds to step S12, where it is decided whether the frame counting index n has reached $n_{max}$. If no, the method returns to step S6, if yes, the method proceeds to step S 14. In step S 14, it is decided whether a scene change has occurred or not. If yes, the method returns to step S4, if no, the method proceeds to step S16. In step S16, the value of c is determined. Since $n=n_{max}$ and k=1, $c=1/n_{max}$ and the method proceeds to step S 18. In step S 18, the current image frame is filtered with the recursive filter defined by the coefficient c determined in step S16. After this, the method proceeds to step S20, where it is determined whether a scene change has happened or not. If no, the method returns to step S 18, if yes, the method returns to step S4. Each of the branching steps S6, S14 and S20, indicates a progression from one image frame to the next in the process of successively filtering the image frame sequence.

As already mentioned, the decision if a scene change has occurred or not is not always clear. Thus, in practice k does not change abruptly from 1 to n, or vice versa, but varies smoothly in the range [1, n], dependent upon scene change detection results, whereby for a relatively high probability of a scene change, a relatively high value of k is selected. By choosing a proper intermediate value of k, the uncertainty of the decision is taken into account. The behavior of n is not affected by the uncertainty - k alone takes on the uncertainty of the scene detection process. The structure of the flow chart thereby remains the same - only steps S6, S 14 and S20 are modified in that, additionally, a value of k in the range [1, n] is chosen depending on the scene change detection results. Thus, in steps S8 and S16, k is not necessarily 1 and c is given by k/n and $k/n_{max}$, respectively.

Now, secondly and corresponding to a fifth embodiment, the case is considered where k is dependent on motion detection results and n is not. In this case, the register holding the frame counting index n works as in the pure scene change case depicted in Fig. 4. In static image areas the full advantages of the combined filter remain. In motion areas however, the advantages of the combined filter disappear. Netherthe less the filter reduces noise and avoids motion artifacts in a similar manner than the prior art adaptive temporally recursive filter.

Now, thirdly, the case is considered where both k and n are dependent on motion detection results. To deal with the motion case, the hardware complexity will become higher, because there are static and moving image areas and in principle each pixel needs a separate frame counting index n. Each n is implemented by one register, for example. The frame counting index n is no more equal to the image frame number relative to the last scene change: in static areas n is equal to the relative image frame number, in motion areas n is less than the relative frame number.

The most direct approach to deal with motion - corresponding to a sixth embodiment - is to provide a frame counting index n for each pixel of an image. With the difference that scene change affects the entire image, whereas motion affects only the pixels for which motion was detected, the adaption of k and n to motion is the same as the adaption of k and n to scene change described in the pure scene change case above. That is, for a relatively high probability of motion, a relatively high value of k is chosen, and, in case that motion has been detected (with a sufficiently high probability), n is reset. This direct approach however, is memory intensive. Given for example a 4 bit register to implement each frame counting index n and a pixel depth of 8 bits, a fraction of $2^4/2^8=1/16$ of the image memory would be required to implement the frame counting indices n of all pixels. A seventh embodiment of the invention also takes motion into account, but requires less memory.

The seventh embodiment, described in the following, uses less frame counting indices than pixels. The number of frame counting indices is decided by the actual or expected number of motion types in an image sequence. A motion type is characterized by motion velocity and motion direction. The information given by a combination of a motion direction and a corresponding motion velocity is called a 'motion vector' and may, for example, be given by a horizontal shift dx and a vertical shift dy. All moving objects having the same motion velocity and motion direction belong to the same motion type. Besides motion types corresponding to actual motion, there is a motion type corresponding to no motion. This motion type corresponds to a motion vector of length zero. For each motion type m there is a frame counting index $n_m$.

Now, for each pixel one of the $n_m$ is selected. The selection among the $n_m$ is governed by the fact, which of the determined motion types provides the best noise suppression effect. That is, that $n_m$ will be chosen of which the corresponding motion vector causes the smallest difference between corresponding two pixels. Corresponding two pixels are shifted in location by the motion vector describing the motion type. This notably includes pixels at the same spatial position, since the motion types comprise the motion type corresponding to no motion.

According to experience, the motion types in an image sequence often do not exceed four. Besides this proper motion types, there are no-motion areas. Therefore, five frame counting indices corresponding to the five motion types will usually be enough to describe the motion of an image sequence.

II.

A second application case - corresponding to an eighth embodiment - to be considered is temporal noise reduction for image sequences from which a single image is obtained. Such sequences are encountered for example in diagnosis or monitoring.

In this case, the single image is obtained by filtering the image sequence or by filtering a part of the image sequence. In the latter case, a "plurality of single images" may be obtained from the entire sequence. Typically, one image frame, called reference frame, is outstanding and other image frames of the sequence support the reference image in order to improve its quality by way of temporal noise reduction.

Because the state-of-the-art adaptive temporally recursive filter, as described by equation (1), follows the actual input, it can not reduce the noise of the reference image, if images are not directly next to each other. For instance, if frame j is the reference image and motion happens in frame j-1, but frame j-J (J ≠ 1) reflects the same scene as frame j does, the state-of-the-art adaptive temporally filter can not make use of the correlation between frame j and frame j-J. It can only make use of the correlation between direct neighboring frames for temporal noise reduction. An example is the occurrence of an covering and uncovering of background (occlusion areas) in an image sequence. This prevents the noise to be effectively reduced if the state-of-the-art adaptive temporally recursive filter employed, since not all of the images can be made use of to reduce the noise

To deal with such image sequences, the filter described by equation (3) can again be employed. In this second application case, k is chosen from the range [0, n]. As in the first application case, a large value of k results in weak noise reduction, a small value of k results in strong noise reduction. Here, specifically, k=n corresponds to no noise reduction and k=0 corresponds to the strongest noise reduction. In the latter case, y(t)=y(t-T) holds, that is, the signal is freezed. The selection process of k however is reversed compared to the first application case. Namely, if motion is detected, k=0 is selected. If no motion is detected, k=n is selected. When the motion detection provides no clear result, k takes an intermediate value. That is, for a relatively high probability of motion k takes a relatively small value. Therefore, the filter output is kept and not discarded or changed as in the state-of-the art adaptive temporally recursive filter. As a result, if the following images are correlated with the reference image, they will contribute to the noise reduction of the reference image, no matter what frame number they have, that is, it does not matter whether the frames are direct neighboring or not. This, in contrast to the state-of-the art adaptive temporally recursive filter, which requires the frames to be direct neighboring. For the second application case, the whole image sequence is usually stored. Therefore, not only the coming images, but also the previous images can contribute to the noise reduction of the reference image, as long as they are correlated with the reference image.

The dependence of k on scene change detection results in this embodiment may be the same as in any of the embodiments corresponding to the first application case, that is, a relatively large value of k is chosen in case of a relatively large probability of scene change. The dependence of the frame counting index n on scene change detection results and/or on motion detection results in this embodiment may be the same as in any of the embodiments corresponding to the first application case. This, notably, includes the case that the frame counting index n is independent of detected motion, that is, the case that n is not reset in case of detected motion and includes the case that the frame counting index n is reset in case of detected motion. This also includes the case that the frame counting index n is reset in case of a detected scene change. Application schemes exist however, where n is not reset in case of a detected scene scene and schemes exist, where a relatively small value of k is chosen in case of a relatively large probability of scene change. Other, or modified schemes of dependency are possible however.

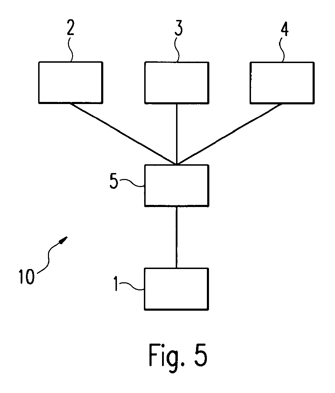

A practical implementation of the present invention is shown in Fig. 5. Fig. 5 shows a device 10 for temporal domain noise reduction of video signals that is operable to implement any of the methods of the first to seventh embodiments described above. The device comprises a filter 1 for successively filtering the image frames of a video signal, a scene detection device 2 for detecting scene change, a motion detection device 3 for detecting motion, an image analyzer 4 for determining a plurality of motion vectors, each motion vector characterizing a motion type present in the image sequence and a processing device 5. Since the device is equipped with a scene change detection device 2, a motion detection device 3,an image analyzer 4 and a processing device 5 the device 10 can implement the method of the seventh embodiment. Hereby, the processing device 5 collects the necessary information from the scene change detection device 2, the motion detection device 3 and the image analyzer 4 in order to select the values for k and n and thereby to determine the filter coefficient c of the filter 1. The filter 1, the scene change detection device 2, the motion detection device 3, the image analyzer 4, and the processing device 5 may, for example, be implemented by software, for example on a programmable DSP processor or on general purpose processors, by dedicated or hardwired discrete or integrated circuitry or by combinations thereof. The components 1-5 of the device 10 may share resources (e.g. frame memory) and may share various intermediate computing results (e.g. pixel value differences).

The present invention and the embodiments of the present invention can be combined with spatial filtering schemes. Although the present invention has been explained with reference to a recursive filter, a non recursive filter can be employed to implement the present invention. Although the present invention has been explained with reference to a first order recursive filter, a recursive filter of any higher order can be employed to implement the present invention. Although the present invention has been explained with reference to specific embodiments, this is by way of illustration only and it will be readily apparent to those skilled in the art that various modifications may be made therein without departing from the scope of the following claims.

## Claims

1. A device (10) for temporal domain noise reduction of video signals which comprise image frames ordered by a frame index, the device comprising
   a filter (1) for successively filtering the image frames of a video signal, wherein
   a filter coefficient of the filter (1) is a function of a frame counting index, whereby said frame counting index corresponds to the frame index shifted by an offset.

2. A filter (1) for temporal domain noise reduction operable to switch between a finite impulse response filter characteristic and an infinite impulse response filter characteristic.

3. A filter (1) for temporal domain noise reduction according to claim 2, wherein the finite impulse response filter characteristic is the impulse response characteristic of an averaging filter.

4. A device (10) for temporal domain noise reduction of video signals which comprise image frames ordered by a frame index, the device comprising
   a filter (1) according to claim 2 or 3 for successively filtering the image frames of a video signal, wherein
   a filter coefficient of the filter (1) is a function of the frame counting index, whereby said frame counting index corresponds to the frame index shifted by an offset.

5. A device (10) for temporal domain noise reduction of video signals according to claim 1 or 4, wherein
   the dependence of the filter coefficient is such that the noise reduction power of the filter (1) is non-constant and monotonically increasing with the frame counting index.

6. A device (10) for temporal domain noise reduction of video signals according to claim 1, 4 or 5, wherein
   the dependence of the filter coefficient is such that the adaptability of the filter (1) is non-constant and monotonically decreasing with the frame counting index.

7. A device (10) for temporal domain noise reduction of video signals according to claim 1, 4, 5 or 6, wherein
   the filter coefficient is the zeroth order filter coefficient.

8. A device (10) for temporal domain noise reduction of video signals according to any one of the claims 1 and 4 to 7, wherein
   the filter coefficient is a non-constant and monotonically decreasing function of the frame counting index.

9. A device (10) for temporal domain noise reduction of video signals according to any one of the claims I and 4 to 8, wherein,
   unless the filter coefficient is set to a value of zero based on a dependence of the filter coefficient other than the dependence from the frame counting index, the absolute value of the filter coefficient is larger than a predetermined positive value.

**10.** A device (10) for temporal domain noise reduction of video signals according to any one of the claims 1 and 4 to 9, wherein

the filter coefficient comprises a first factor which is independent of the frame counting index and a second factor which is a non-constant and monotonically decreasing function of the frame counting index.

**11.** A device (10) for temporal domain noise reduction of video signals according to claim 10, wherein

the absolute value of the second factor is larger than a predetermined positive value.

**12.** A device (10) for temporal domain noise reduction of video signals according to any one of the claims 1 and 4 to 11, wherein

the filter coefficient is, up to a maximum value of the frame counting index, inversely proportional to the frame counting index.

**13.** A device (10) for temporal domain noise reduction of video signals according to claim 12, wherein,

starting from the maximum value, the filter coefficient is independent of the frame counting index.

**14.** A device (10) for temporal domain noise reduction of video signals according to any one of the claims 1 and 4 to 13, comprising

a scene change detection device (2) for detecting scene change, whereby

the filter is adapted to reset the frame counting index when a scene change is detected.

**15.** A device (10) for temporal domain noise reduction of video signals according to any one of the claims 1 and 4 to 14, comprising

a motion detection device (3) for detecting motion, whereby

the filter is adapted to reset the frame counting index when motion is detected.

**16.** A device (10) for temporal domain noise reduction of video signals according to claim 15, wherein

the filter coefficient is dependent on motion detection information provided by the motion detection device (3), whereby filter coefficient takes a relatively high value for a relatively high probability of motion.

**17.** A device (10) for temporal domain noise reduction of video signals according to claim 15, wherein

the filter coefficient is dependent on motion detection information provided by the motion detection device (3), whereby the filter coefficient takes a relatively low value for a relatively high probability of motion.

**18.** A device (10) for temporal domain noise reduction of video signals according to claim 15, 16 or 17, comprising

an image analyzer (4) for determining a plurality of motion vectors, each motion vector characterizing a motion type present in the image sequence,

a processing device (5) adapted to

operate for each motion vector a separate frame counting index,

calculate differences of value between a first pixel of a first image frame and corresponding pixels of a second image frame, whereby each pixel of the corresponding pixels is shifted relative to the first pixel by a different one of the motion vectors, and

select the frame counting index which corresponds to the motion vector yielding the smallest difference of pixel values, whereby

the filter coefficient is a function of the selected frame counting index and the filter (1) is adapted to filter the first pixel.

**19.** A device (10) for temporal domain noise reduction of video signals according to any one of the claim 1 and 4 to 18, wherein the filter (1) is a recursive filter.

**20.** A method for temporal domain noise reduction of a video signal wherein image frames of the video signal are ordered by a frame index and are successively filtered by a filter wherein

a filter coefficient of the filter is a function of a frame counting index, whereby said frame counting index corresponds to the frame index shifted by an offset.

**21.** A method for temporal domain noise reduction of a video signal according to claim 20, wherein

the dependence of the filter coefficient on the frame index is such that the noise reduction power of the filter is non-constant and monotonically increasing with the frame counting index.

**22.** A method for temporal domain noise reduction of a video signal according to claim 20 or 21, wherein the dependence of the filter coefficient on the frame counting index is such that the adaptability of the filter is non-constant and monotonically decreasing with the frame counting index.

**23.** A method for temporal domain noise reduction of a video signal according to claim 20, 21 or 22, wherein the filter coefficient is the zeroth order filter coefficient.

**24.** A method for temporal domain noise reduction of a video signal according to any one of the claims 20 to 23, wherein the filter coefficient is a non-constant and monotonically decreasing function of the frame counting index.

**25.** A method for temporal domain noise reduction of a video signal according to any one of the claims 20 to 24, wherein, unless the filter coefficient is set to a value of zero based on a dependence of the filter coefficient other than the dependence from the frame counting index, the absolute value of the filter coefficient is larger than a predetermined positive value.

**26.** A method for temporal domain noise reduction of a video signal according to any one of the claims 20 to 25, wherein the filter coefficient comprises a first factor which is independent of the frame counting index and a second factor which is a non-constant and monotonically decreasing function of the frame counting index.

**27.** A method for temporal domain noise reduction of a video signal according to claim 26, wherein the absolute value of the second factor is larger than a predetermined positive value.

**28.** A method for temporal domain noise reduction of a video signal according to any one of the claims 20 to 27, wherein the filter coefficient is, up to a maximum value of the frame counting index, inversely proportional to the frame counting index.

**29.** A method for temporal domain noise reduction of a video signal according to claim 28, wherein, starting from the maximum value, the filter coefficient is independent of the frame counting index.

**30.** A method for temporal domain noise reduction of a video signal according to any one of the claims 20 to 295, comprising the steps of
detecting scene change and
resetting the frame counting index when a scene change is detected.

**31.** A method for temporal domain noise reduction of a video signal according to any one of the claims 20 to 30, comprising the steps of
detecting motion and
resetting the filter coefficient when motion is detected.

**32.** A method for temporal domain noise reduction of a video signal according to claim 31, wherein the filter coefficient is dependent on an outcome of the motion detection, whereby the filter coefficient takes a relatively high value for a relatively high probability of motion.

**33.** A method for temporal domain noise reduction of a video signal according to claim 32, wherein the filter coefficient is dependent on an outcome of the motion detection, whereby the filter coefficient takes a relatively low value for a relatively high probability of motion.

**34.** A method for temporal domain noise reduction of a video signal according to claim 31, 32 or 33, comprising the steps of
determining a plurality of motion vectors, each motion vector characterizing a motion type present in the image sequence,
operating for each motion vector a separate frame counting index,
calculating differences of value between a first pixel of a first image frame and corresponding pixels of a second image frame, whereby each pixel of the corresponding pixels is shifted relative to the first pixel by a different one of the motion vectors, and
selecting the frame counting index which corresponds to the motion vector yielding the smallest difference of pixel values,

whereby the filter coefficient is a function of the selected frame counting index and the filter is employed to filter the first pixel.

**35.** A method for temporal domain noise reduction of a video signal according to any one of the claims 20 to 34, wherein the filter (1) is a recursive filter.

**36.** A software product comprising program information that, when executed on a computing device is operable to carry out the method for temporal domain noise reduction of a video signal according to any one of the claims 20 to 35.

Fig. 1

Fig. 2

Fig. 3

Fig. 4

Fig. 5

**European Patent Office**

## PARTIAL EUROPEAN SEARCH REPORT

which under Rule 45 of the European Patent Convention shall be considered, for the purposes of subsequent proceedings, as the European search report

Application Number

EP 06 12 3273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 508 751 A (NITTA KEIICHI [JP]) 16 April 1996 (1996-04-16)<br><br>* the whole document *<br>* figure 2 *<br>----- | 1-15, 19-31, 35,36 | INV.<br>H04N5/911<br>G06T5/00<br>H04N5/21 |
| X | US 5 905 533 A (HIDARI HIROFUMI [JP]) 18 May 1999 (1999-05-18)<br><br>* column 1, line 29 - line 50 *<br>* column 3, line 55 - column 4, line 15 *<br>* column 12, line 12 - line 23 *<br>* figures 6-9 *<br>----- | 1-15, 19-31, 35,36 | |
| A | JOSTSCHULTE K ET AL: "Perception adaptive temporal TV-noise reduction using contour preserving prefilter techniques" IEEE TRANSACTIONS ON CONSUMER ELECTRONICS IEEE USA, vol. 44, no. 3, August 1998 (1998-08), pages 1091-1096, XP011083718 ISSN: 0098-3063 * page 1091, left-hand column, last line - right-hand column *<br>----- | 1-36 | |

| TECHNICAL FIELDS SEARCHED (IPC) |
|---|
| H04N<br>G06T |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Berlin | 11 April 2007 | Ellerbrock, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

European Patent
Office

INCOMPLETE SEARCH
SHEET C

Application Number

EP 06 12 3273

Claim(s) searched completely:
       1-15, 19-31, 35,36

Claim(s) not searched:
       16-18, 32-34

Reason for the limitation of the search:

The subject matter of claims 16-18, 32-34 does not comply with Art.83
because it is not sufficiently disclosed by the application. Thus, a
meaningful search according to Rule 45, EPC, was not possible.

Art. 83, EPC states that a European patent application must disclose the
subject matter in a manner sufficiently clear and complete for it to be
carried out by a person skilled in the art.

Concerning claims 16,17, 32,33:
Claims 16,17, 32,33 claim the functional feature that the filter
coefficient are adapted to the probability of motion. However, the
application does not disclose at all how said probability is determined
and it is not clear for the skilled person how this could be implemented.
To be sufficiently disclosed at least some kind of probabability model
needs to be disclosed together with some estimation procedure for
estimating said probability of motion from the model.

Concerning claims 18,34:
The so-called frame counting index claimed by claim 18 and denoted in the
description as $n\_m$ (desc.: p.11,L11-34) does not count the frames but it
is a local (i.e. pixel-based) parameter which determines the filter
coefficient. Both, the claim and the description state the functional
feature that the frame counting index $n\_m$ depends on both, the velocity
and the direction of the motion without stating how $n\_m$ is defined using
the velocity and the direction of motion. For the skilled person it is
obvious that the higher the velocity of an object the more weight should
be given to the current image to avoid filter artifacts (blurring). But
is it not obvious for the skilled person how the direction of motion
should guide the filter coefficient in a meaningful manner and what
technical problem shall be solved by doing so. The same objection applies
to claim 34 because it is the corresponding method claim.

## ANNEX TO THE EUROPEAN SEARCH REPORT
## ON EUROPEAN PATENT APPLICATION NO.

EP 06 12 3273

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2007

| Patent document cited in search report | | Publication date | Patent family member(s) | | Publication date |
|---|---|---|---|---|---|
| US 5508751 | A | 16-04-1996 | JP | 7162718 A | 23-06-1995 |
| US 5905533 | A | 18-05-1999 | NONE | | |

EPO FORM P0459